# EUROPÄISCHE PATENTSCHRIFT

(11) **EP 1 559 307 B1**
(45) Veröffentlichungstag und Bekanntmachung des Hinweises auf die Patenterteilung: **16.01.2008**
(21) Anmeldenummer: 05000760.8
(22) Anmeldetag: 15.01.2005
(51) Int. Cl.: A01F 12/20

(54) **Dreschwerk für Mähdrescher**
Combine harvester threshing assembly
Ensemble de battage pour moissonneuse-batteuse

(30) Priorität: 28.01.2004 DE 102004004495
(43) Veröffentlichungstag der Anmeldung: 03.08.2005
(73) Patentinhaber: CLAAS Selbstfahrende Erntemaschinen GmbH, 33428 Harsewinkel (DE)
(72) Erfinder: Dammann, Martin, 33428 Harsewinkel (DE); Speckamp, Dirk, 59073 Hamm (DE); Roderfeld, Heinrich, 33428 Harsewinkel (DE)

(56) Entgegenhaltungen:
- EP-A- 0 071 697
- CH-A- 424 349
- FR-A- 2 725 109
- US-A- 1 853 784
- US-A- 2 266 806

## Beschreibung

Die Erfindung betrifft einen selbstfahrenden Mähdrescher mit einem Dreschwerk nach dem Oberbegriff des Anspruchs 1 (siehe FR-A-2 725 109).

Ein selbstfahrender Mähdrescher kommt bei der Ernte von verschiedenen Erntegütern wie z. B. Mais oder Getreide zum Einsatz. Die Maschine soll bei jedem Erntegut und bei allen Erntebedingungen einen maximalen Erntegutdurchsatz erreichen und dabei ein Produkt hoher Qualität bei gleichzeitig geringen Verlusten erzeugen.

Die Leistung des Mähdreschers hängt direkt vom Materialfluss durch das Dreschwerk ab. Eine hohe Geschwindigkeit des Erntegutes im Dreschwerk bzw. eine hohe Beschleunigung des Ernteguts durch die Dreschtrommel führt zu einem dünneren Gutschleier, was eine höhere Abscheidung bzw. bessere Entgrannung am Dreschkorb ermöglicht. Eventuell vorhandene Ernteguthaufen im Dreschwerk werden aufgelöst und der Erntegutstrom beim Austritt aus dem Dreschwerk vergleichmäßigt.

Der Erfindung liegt daher die Aufgabe zugrunde eine universell einsetzbare Dreschtrommel zu entwickeln, die bei jedem Erntegut, verschiedenen Erntebedingungen und Erntegutarten einen maximalen Durchsatz und eine maximale Dreschleistung erzielt.

Diese Aufgabe wird erfindungsgemäß durch die im Patentanspruch 1 genannten Merkmale gelöst. Weitere vorteilhafte Ausführungen des Erfindungsgegenstandes ergeben sich aus den übrigen Ansprüchen.

Indem in Umfangsrichtung und/oder quer zur Achsrichtung der Dreschtrommel wenigstens ein Mitnehmer an der Dreschtrommel angeordnet ist, wird das Erntegut auf eine Umlaufgeschwindigkeit beschleunigt, die annähernd der Umlaufgeschwindigkeit des Mitnehmers an der Dreschtrommel entspricht.

Dadurch, dass die Mitnehmer annähernd mittig zwischen zwei in Umfangsrichtung und/oder in Achsrichtung benachbarten Dreschleisten angeordnet sind, wird das Erntegut kontinuierlich durch die Mitnehmer und Dreschleisten schlagend bearbeitet und beschleunigt.

Eine konstruktiv einfache Ausführung der Erfindung ergibt sich dann, wenn die Mitnehmer als Paddel und/oder als Stift ausgeführt sind, wobei sich diese Form der Mitnehmer auf einfache Weise an bestehenden Dreschtrommeln nachrüsten lässt.

Eine besonders vorteilhafte Ausführung ergibt sich, wenn eine Vielzahl von Paddeln und/oder Stiften in Umfangsrichtung der Dreschtrommel an der Dreschtrommel angeordnet sind, so dass das vom Schrägförderer zugeführte Erntegut kontinuierlich erfasst und beschleunigt wird.

Damit das Erntegut auf der ganzen Breite erfasst und beschleunigt wird, ist in einer vorteilhaften Weiterbildung der Erfindung eine Vielzahl von Paddeln und/oder Stiften in Achsrichtung der Dreschtrommel an der Dreschtrommel angeordnet.

Dadurch, dass der Mitnehmer eine Schlagfläche aufweist, die unter einem Winkel zu einem Hüllkreis der Dreschtrommel geneigt ist, wird der Formschluss zwischen Erntegut und Mitnehmern und damit die Förderleistung der Dreschtrommel erhöht.

Damit die Dreschtrommel in Verbindung mit einem geschlossenen Dreschkorb eingesetzt werden kann, rotieren die Paddel und/oder Stifte innerhalb des Hüllkreises oder auf dem Hüllkreis der Dreschtrommel.

Um die Erfassung des Erntegutes am Eingang des Dreschwerks zu optimieren, überragen die Stifte den Hüllkreis der Dreschtrommel.

In vorteilhafter Weiterbildung der Erfindung wird der Dresch- und Abscheidekorb von Dreschkorbsegmenten gebildet, wobei der Stift durch einen Zwischenraum zwischen den Dreschkorbsegmenten hindurchgreift, damit der optimale Dreschspalt zwischen Dreschtrommel und Dreschkorb bestehen bleiben kann.

Speziell bei der Ernte von Mais ist es vorteilhaft, wenn der Dreschtrommel Abdeckbleche in der Weise zugeordnet sind, dass die Dreschleisten zusammen mit den zu ihnen parallel verlaufenden Abdeckblechen einen annähernd geschlossenen, zylindrischen Trommelmantel ergeben.

Eine einfache einheitliche Anpassung der Mitnehmer eines Abdeckbleches an verschiedene Erntegüter, Erntebedingungen und Ernteprodukte ist möglich, wenn die Abdeckbleche verstellbar sind.

Um den Komplettaustausch oder die Verstellung der Paddel und/oder Stifte zu vereinfachen, sind die Paddel und/oder Stifte in Achsrichtung der Dreschtrommelachse auf den Abdeckblechen angeordnet.

Damit die Paddel auf einem gemeinsamem Hüllkreis justierbar sind, ist das Paddel verstellbar.

Eine besonders einfache konstruktiv Lösung ergibt sich, wenn die Dreschtrommel von Tragsternen gebildet wird, auf denen die Stifte angeordnet sind.

Indem die Stifte verstellbar sind, können die Stifte auf einem gemeinsamen äußeren Hüllkreis eingerichtet werden.

Eine besonders vorteilhafte Bestückung der Dreschtrommel ergibt sich, wenn die Paddel zweier benachbarter, in Achsrichtung der Dreschtrommel verlaufenden Reihen in Achsrichtung versetzt auf dem Trommelmantel angeordnet sind.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Fig.1: einen schematischen Längsschnitt durch einen Mähdrescher,
- Fig.2: eine gemeinsame Ansicht der Draufsichten zweier verschiedener, erfindungsgemäßer Dreschwerke,
- Fig.3: einen Querschnitt durch das erfindungsgemäße Dreschwerk nach Linie III-III in Fig.2,
- Fig.4: einen Querschnitt durch das erfindungsgemäße Dreschwerk nach Linie IV-IV in Fig.2.

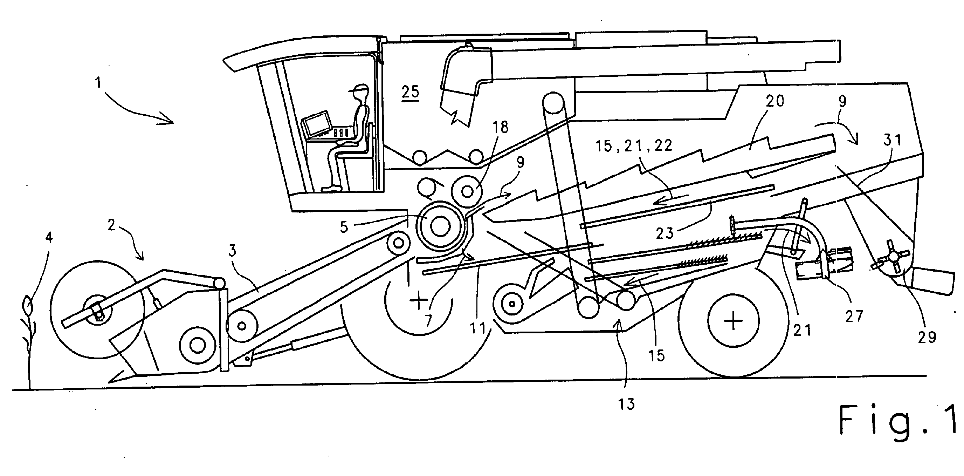

In Fig.1 ist ein schematischer Längsschnitt durch einen Mähdrescher 1 dargestellt. Der Mähdrescher 1 ist mit einem Schneidwerk 2 ausgestattet, das an einem Schrägförderer 3 angeordnet ist. Mit dem Schneidwerk 2 nimmt der Mähdrescher 1 das Erntegut 4 beispielsweise Weizen auf und führt es dem Schrägförderer 3 zu. Der Schrägförderer 3 übergibt das Erntegut 4 an ein nachgeschaltetes Dreschwerk 5. Das Dreschwerk 5 bereitet das Erntegut 4 auf, wobei es in ein Korn-Spreu-Gemisch 7 und ein aus ausgedroschenen Halmen bestehenden Gutstrom 9 geteilt wird. Das Korn-Spreu-Gemisch 7 wird über einen Vorbereitungsboden 11 direkt zu einer Reinigungseinrichtung 13 gefördert, die die Körner 15 von den Nichtkornbestandteilen, d. h. von Halm- und Spreuteilen trennt.
Hinter dem Dreschwerk 5 ist eine entgegen dem Uhrzeigersinn rotierende Wendetrommel 18 angeordnet, die den aus ausgedroschenen Halmen bestehenden Gutstrom 9 auf einen Hordenschüttler 20 fördert. Der Hordenschüttler 20 trennt dabei noch im Gutstrom 9 vorhandene Körner 15, Kurzstroh 21 und Spreu 22, die über einen Rücklaufboden 23 ebenfalls in die Reinigungseinrichtung 13 gelangen. Die von der Reinigungseinrichtung 13 abgetrennten Körner 15 werden in einen Komtank 25 des Mähdreschers 1 gefördert. Die im hinteren Bereich des Mähdreschers 1 aus der Reinigungseinrichtung 13 austretenden Halm- und Spreuteile 21 werden mit einem Spreuverteiler 27 gleichmäßig auf dem Feld verteilt. Am Heck des Mähdreschers 1 ist eine Häcksel- und Verteileinrichtung 29 angeordnet. Der am Ende des Hordenschüttlers 20 überlaufende Gutstrom 9 wird je nach Stellung einer schwenkbaren Klappe 31 entweder im Schwad hinter dem Mähdrescher 1 auf dem Feld abgelegt oder von der Häcksel- und Verteileinrichtung 29 zerkleinert und anschließend gleichmäßig hinter dem Mähdrescher 1 auf dem Feld verteilt.
Bei dem in Fig.1 gezeigten Ausführungsbeispiel handelt es sich um einen selbstfahrenden Mähdrescher 1 mit einem Hordenschüttler 20 als Abscheideorgan. Die Erfindung ist ausdrücklich nicht auf diesen Mähdreschertyp beschränkt, sondern bezieht sich beispielsweise auch auf Mähdrescher mit wenigstens einem Rotor als Abscheideorgan.

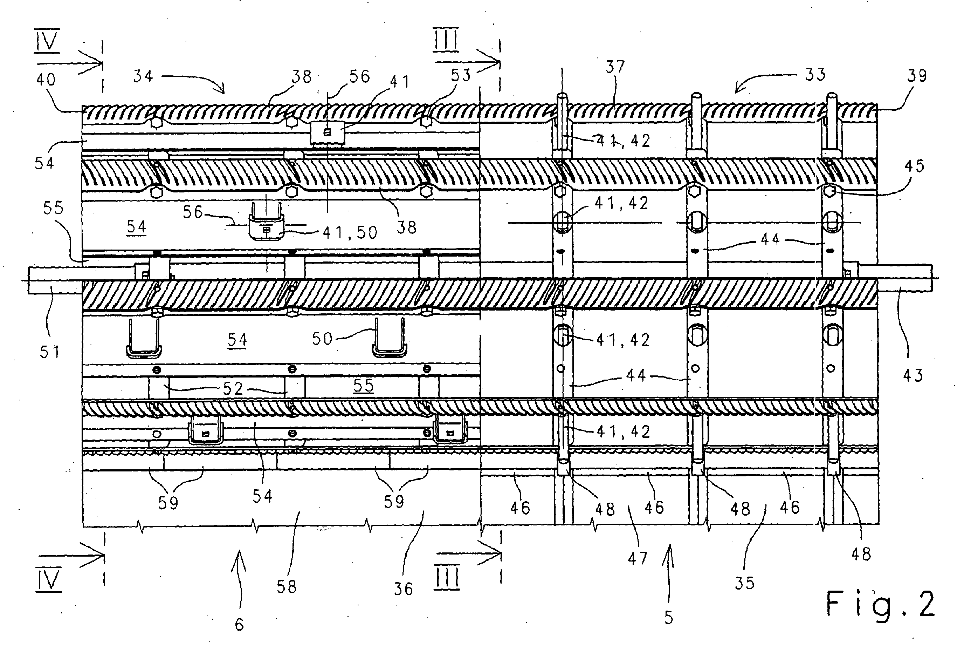

In Fig. 2 sind in einer gemeinsamen Ansicht die Draufsichten zweier verschiedener, erfindungsgemäßer Dreschwerke 5, 6 dargestellt, jedes Dreschwerk 5, 6 besteht aus einer rotierenden Dreschtrommel 33, 34 und einem unterhalb der Dreschtrommel 33, 34 angeordnetem Dresch- und Abscheidekorb 35, 36. An der Dreschtrommel 33, 34 sind mehrere Dreschleisten 37, 38 angeordnet, die teilweise eine Trommelmantelfläche 39, 40 bilden. In Umfangsrichtung und in Achsrichtung der Dreschtrommel 33, 34 sind mehrere erfindungsgemäße und noch näher zu beschreibende Mitnehmer 41 mittig zwischen zwei in Umfangsrichtung der Dreschtrommel 33, 34 benachbarten Dreschleisten 37, 38 an der Dreschtrommel 33, 34 angeordnet. Es liegt im Rahmen der Erfindung, dass lediglich ein Mitnehmer 41 an der Dreschtrommel 33, 34 angeordnet sein kann oder mehrere Mitnehmer 41 nur in Achsrichtung oder nur in Umfangsrichtung an der Dreschtrommel 33, 34 fixiert sein können.
Die rechte Draufsicht zeigt eine erste Ausführungsform des Dreschwerks 5 mit einer Dreschtrommel 33, bei der die Mitnehmer 41 in Form von Stiften 42 ausgeführt sind. Die Dreschtrommel 33 besteht aus mehreren gleichmäßig beabstandet auf einer Drehtrommelachse 43 befestigten Tragsternen 44. Auf dem Umfang jedes Tragsterns 44 sind gleichmäßig beabstandet die Dreschleisten 37 mit Schraubverbindungen 45 befestigt. Eine Vielzahl von Stiften 42 sind sowohl in Achsrichtung als auch in Umfangsrichtung zwischen den Dreschleisten 37 auf dem Umfang der Tragsterne 44 an der Dreschtrommel 33 angeordnet. Der sich unterhalb der Dreschtrommel 33 erstreckende Dresch- und Abscheidekorb 35 ist in mehrere Dreschkorbsegmente 46 unterteilt, die in einem Rahmen 47 gelagert sind. Im Bereich der in Umfangsrichtung der Dreschtrommel 33 umlaufenden Stifte 42 befinden sich Zwischenräume 48 zwischen den einzelnen Dreschkorbsegmenten 46, in die die Stifte 42 bei Rotation der Dreschtrommel 33 eintauchen.
Auf der linken Seite ist eine zweite Ausführungsform des Dreschwerks 6 dargestellt bei der die Mitnehmer 41 in Form von Paddeln 50 ausgeführt sind. Auch diese Dreschtrommel 34 besteht aus mehreren gleichmäßig beabstandet auf einer Drehtrommelachse 51 befestigten Tragsternen 52. Auf dem Umfang jedes Tragsterns 52 sind gleichmäßig beabstandet die Dreschleisten 38 mit Schraubverbindungen 53 befestigt. Zwischen den Dreschleisten 38 sind bei dieser Ausführungsform parallel zu den Dreschleisten 38 verlaufende Abdeckbleche 54 angeordnet, die mit Schraubenverbindungen 53 lösbar an den Dreschleisten 38 befestigt sind. Die Abdeckbleche 54 verschließen nur einen Teilbereich des Trommelmantels 40 zwischen zwei benachbarten Dreschleisten 43, so dass Öffnungen 55 verbleiben. Es liegt im Rahmen der Erfindung, dass die Abdeckbleche 54 beweglich mit der Dreschtrommel 34 verbunden sind und auf diese Weise die Öffnungen 55 zwischen den Abdeckblechen 54 und den Dreschleisten 38 verstellt werden können. Dreschleisten 38 und Abdeckbleche 54 ergeben zusammen einen annähernd geschlossenen Trommelmantel 40. Mittig zwischen jeweils zwei in Umfangsrichtung benachbarten Dreschleisten 38 sind in Achsrichtung die Paddel 50 auf den Abdeckblechen 54 fixiert. Eine Vielzahl von Paddeln 50 sind sowohl in Achsrichtung als auch in Umfangsrichtung auf dem Trommelmantel 40 angeordnet, wobei die Paddel 50 zweier benachbarter, in Achsrichtung der Dreschtrommel verlaufenden Reihen 56 in Achsrichtung versetzt auf dem Trommelmantel 40 angeordnet sind. Der unterhalb der Dreschtrommel 34 angeordnete Dreschkorb 36 besteht aus mehreren lückenlos aneinanderliegenden Dreschkorbsegmenten 59, die von einem Rahmen 58 gehalten werden.
Es liegt im Rahmen der Erfindung das an der Dreschtrommel 33, 34 sowohl Stifte 42 als auch Paddel 50 als Mitnehmer 41 angeordnet sein können.

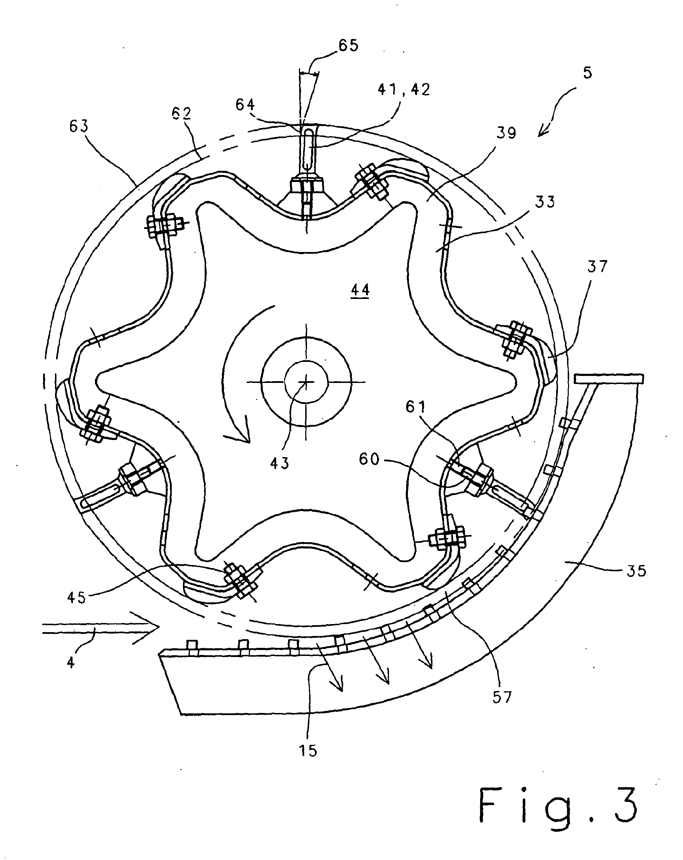

Fig. 3 zeigt einen Querschnitt durch das erfindungsgemäße Dreschwerk 5. Auf der Unterseite umschlingt die Dreschtrommel 33 beabstandet, wenigstens teilweise der Dresch- und Abscheidekorb 35, wobei sich zwischen Dreschtrommel 33 und Dresch- und Abscheidekorb 35 ein Dreschspalt 57 ergibt, der vom Eingang des Dreschwerks 5 zum Ausgang des Dreschwerks 5 hin abnimmt. Das von dem Schrägförderer 3 zugeführte Erntegut 4 wird von den als Stiften 42 ausgeführten erfindungsgemäßen Mitnehmern 41 der schnell rotierenden Dreschtrommel 33 erfasst und durch den Dreschspalt 57 zwischen Dreschtrommel 33 und Dresch- und Abscheidekorb 35 gefördert. Vor Eintritt in das Dreschwerk 33 entspricht die Zuführgeschwindigkeit des Ernteguts 4 in etwa der Geschwindigkeit des Schrägförderers 3. Die Stifte 42 der Dreschtrommel 33 beschleunigen das Erntegut 4 vor Eintritt in den Dreschspalt 59 auf die hohe Umfangsgeschwindigkeit der Stifte 42. Die hohe Geschwindigkeit des Ernteguts 4 im Dreschwerk 5 führt zu einem verbesserten, gleichmäßigeren Gutfluss und einem dünneren Gutschleier im Dreschwerk 5 sowie zu einer schnelleren Gutübergabe an die nachgeschaltete Wendetrommel 18. Ein optimaler Gutfluss und ein dünner Gutschleier im Dreschwerk 5 bewirken, dass die Dreschleisten 37 optimal auf das Erntegut 4 einwirken, wodurch sich die Anzahl der durch die Dreschleisten 37 aus dem Erntegut 4 ausgeriebenen Körner 15 erhöht. Die hohe Geschwindigkeit des Erntegutes 4 im Dreschspalt 57 führt zudem durch die Umlenkung des Erntegutes 4 im Dreschspalt 57 zu einer hohen, auf das Erntegut 4 wirkenden Zentrifugalkraft, welche ein besseres Trennen der Körner 15 vom Erntegut 4 am Dresch- und Abscheidekorb bedingt.
Die Stifte 42 sind an ihren der Dreschtrommel 33 zugewandten Seite mit Gewindeenden 60 versehen, die in entsprechende Gewindebohrungen 61 am Tragstern 44 eingeschraubt sind, diese Art der Befestigung erlaubt eine schnelle Montage bzw. Verstellung der Stifte 42 in Umfangsrichtung.
Die äußeren Enden der Stifte 42 ragen über einen von den Dreschleisten 37 der rotierenden Dreschtrommel 33 begrenzten Hüllkreis 62 hinaus und begrenzen gemeinsam einen äußeren Hüllkreis 63. Die Stifte 42 weisen eine Schlagfläche 64 auf, die in einem Winkel 65 zu dem äußeren Hüllkreis 63 der Dreschtrommel 33 verläuft. Die über den Hüllkreis 62 der Dreschleisten 37 überstehenden äußeren Enden der Stifte 42 ragen über den Dreschspalt 57 hinaus in den Bereich des Dresch- und Abscheidekorbes 35 hinein.

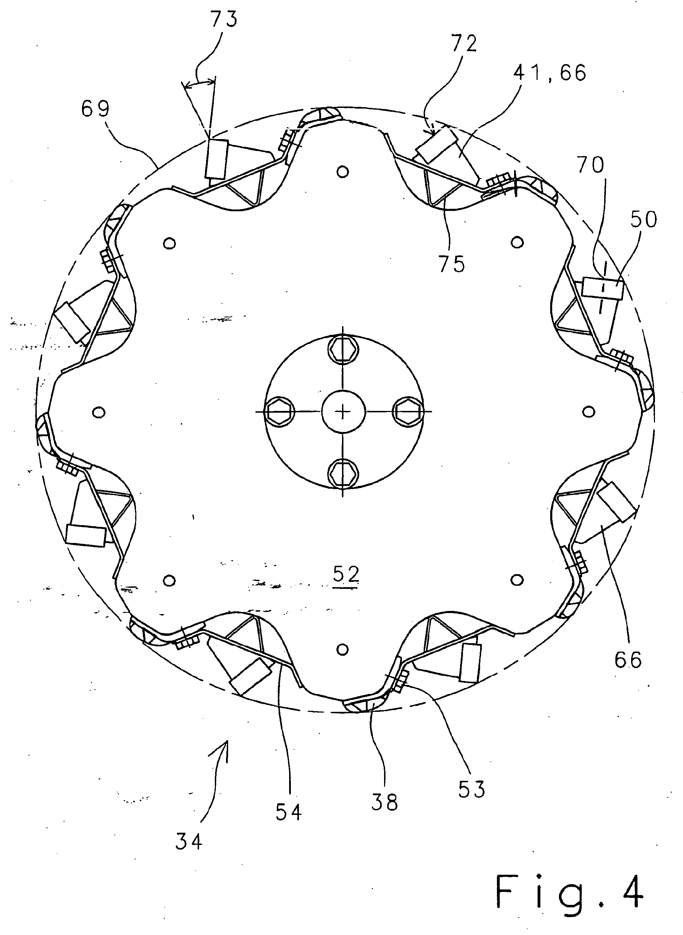

Fig. 4 zeigt die Seitenansicht einer weiteren Ausführungsform einer Dreschtrommel 34 mit als Paddel 50 ausgeführten Mitnehmern 41. Alle Dreschleisten 38 bilden bei der Rotation der Dreschtrommel 34 einen gemeinsamen Hüllkreis 69. Mittig zwischen jeweils zwei in Umfangsrichtung benachbarten Dreschleisten 38 sind die Paddel 50 auf den Abdeckblechen 54 befestigt. Die Paddel 50 sind mit Schraubverbindungen 70 lösbar an Konsolen 66 angeschraubt, die auf die Abdeckbleche 54 aufgeschweißt sind, wobei die Schraubverbindung 70 eine separate Verstellung jedes einzelnen Paddels 50 ermöglicht. Die Paddel 50 weisen eine Schlagfläche 72 auf, die in einem Winkel 73 zu dem Hüllkreis 69 der Dreschtrommel 34 verläuft, die äußeren Kanten der Paddel 50 rotieren auf dem Hüllkreis 69 der Dreschleisten 38.
Es liegt im Rahmen der Erfindung, dass die Paddel 50 den Hüllkreis 69 der Dreschleisten 38 überragen können. Auf der dem Tragstern 52 zugewandten Seite des Abdeckblechs 54 ist ein Blechprofil 75 aufgeschweißt, das zur Verstärkung des Abdeckblechs 54 dient, gleichzeitig stützt das Blechprofil 75 das Abdeckblech 54 zusätzlich an dem Tragstern 52 ab.

Weiter liegt es im Rahmen der Erfindung, dass die erfindungsgemäßen Mitnehmer 41 auch bei Dreschwerken mit mehreren Dreschtrommeln ausgebildet sein können, um die beschriebenen Effekte zu erzielen.

### Bezugszeichenliste:

- 1: Mähdrescher
- 2: Schneidwerk
- 3: Schrägförderer
- 4: Erntegut
- 5: Dreschwerk
- 6: Dreschwerk
- 7: Korn-Spreu-Gemisch
- 9: Gutstrom
- 11: Vorbereitungsboden
- 13: Reinigungseinrichtung
- 15: Körner
- 16: Nichtkombestandteile
- 18: Wendetrommel
- 20: Hordenschüttler
- 21: Kurzstroh
- 22: Spreu
- 23: Rücklaufboden
- 25: Korntank
- 27: Spreuverteiler
- 29: Häcksel- und Verteileinrichtung
- 31: Schwenkbare Klappe
- 33: Dreschtrommel
- 34: Dreschtrommel
- 35: Dresch- und Abscheidekorb
- 36: Dresch- und Abscheidekorb
- 37: Dreschleiste
- 38: Dreschleiste
- 39: Trommelmantelfläche
- 40: Trommelmantelfläche
- 41: Mitnehmer
- 42: Stifte
- 43: Dreschtrommelachse
- 44: Tragstern
- 45: Schraubverbindungen
- 46: Dreschkorbsegment
- 47: Rahmen
- 48: Zwischenraum
- 50: Paddel
- 51: Dreschtrommelachse
- 52: Tragstern
- 53: Schraubverbindungen
- 54: Abdeckbleche
- 55: Öffnungen
- 56: Reihe
- 57: Dreschspalt
- 58: Rahmen
- 59: Dreschkorbsegment
- 60: Gewindeenden
- 61: Gewindebohrung
- 62: Hüllkreis
- 63: Hüllkreis
- 64: Schlagfläche
- 65: Winkel
- 66: Konsole
- 69: Hüllkreis
- 70: Schraubverbindung
- 72: Schlagfläche
- 73: Winkel
- 75: Blechprofil

## Patentansprüche

1. Selbstfahrender Mähdrescher (1) mit zumindest einem Dreschwerk (5, 6), im wesentlichen bestehend aus wenigstens einer Dreschtrommel (33, 34) und einem Dresch- und Abscheidekorb (35, 36), wobei auf der Trommelmantelfläche der Dreschtrommel (33, 34) Dreschleisten (37, 38) angeordnet sind und /oder die Dreschleisten (37,38) die Trommelmantelfläche zumindest teilweise bilden,
wobei
dass in Umfangsrichtung und/oder in Achsrichtung der Dreschtrommel (33, 34) wenigstens ein Mitnehmer (41) an der Dreschtrommel (33, 34) angeordnet ist, **dadurch gekennzeichnet, dass** die Mitnehmer (41) den Hüllkreis (62, 69) der Dreschtrommel (33) überragen.

2. Selbstfahrender Mähdrescher mit einem Dreschwerk nach Anspruch 1,
**dadurch gekennzeichnet,**
**dass** der Mitnehmer (41) annähernd mittig zwischen zwei in Umfangsrichtung und/oder in Achsrichtung benachbarten Dreschleisten (37, 38) angeordnet ist.

3. Selbstfahrender Mähdrescher mit einem Dreschwerk nach wenigstens einem der vorangegangenen Ansprüche,
**dadurch gekennzeichnet,**
**dass** die Mitnehmer (41) als Paddel (50) und/oder als Stift (42) ausgeführt sind.

4. Selbstfahrender Mähdrescher mit einem Dreschwerk nach wenigstens einem der vorangegangenen Ansprüche,
**dadurch gekennzeichnet,**
**dass** eine Vielzahl von Paddeln (50) und/oder Stiften (42) in Umfangsrichtung der Dreschtrommel (33, 34) an der Dreschtrommel (33, 34) angeordnet sind.

5. Selbstfahrender Mähdrescher mit einem Dreschwerk nach wenigstens einem der vorangegangenen Ansprüche,
**dadurch gekennzeichnet,**
**dass** eine Vielzahl von Paddeln (50) und/oder Stiften (42) in Achsrichtung der Dreschtrommel (33, 34) an der Dreschtrommel (33, 34) angeordnet sind.

6. Selbstfahrender Mähdrescher mit einem Dreschwerk nach wenigstens einem der vorangegangenen Ansprüche,
**dadurch gekennzeichnet,**
**dass** der Mitnehmer (41) eine Schlagfläche (64, 72) aufweist, die unter einem Winkel (65, 73) zu einem Hüllkreis (63, 69) der Dreschtrommel (33, 34) geneigt ist.

7. Selbstfahrender Mähdrescher mit einem Dreschwerk nach wenigstens einem der vorangegangenen Ansprüche,
**dadurch gekennzeichnet,**
**dass** der Hüllkreis (63, 69) der Paddel (50) und/oder der Stifte (42) den Hüllkreis (62, 69) der Dreschleisten (37, 38) nicht überragt.

8. Selbstfahrender Mähdrescher mit einem Dreschwerk nach wenigstens einem der vorangegangenen Ansprüche,
**dadurch gekennzeichnet,**
**dass** die als Stifte (42) oder Paddel (50) ausgeführten Mitnehmer (41) den Hüllkreis (62, 69) der Dreschtrommel (33) überragen.

9. Selbstfahrender Mähdrescher mit einem Dreschwerk nach wenigstens einem der vorangegangenen Ansprüche,
**dadurch gekennzeichnet,**
**dass** der Dresch- und Abscheidekorb (35) von Dreschkorbsegmenten (46) gebildet wird, wobei der Stift (42) durch einen Zwischenraum (48) zwischen den Dreschkorbsegmenten (46) hindurchgreift.

10. Selbstfahrender Mähdrescher mit einem Dreschwerk nach wenigstens einem der vorangegangenen Ansprüche,
**dadurch gekennzeichnet,**
**dass** der Dreschtrommel (34) Abdeckbleche (54) in der Weise zugeordnet sind, dass die Dreschleisten (38) zusammen mit den zu ihnen parallel verlaufenden Abdeckblechen (54) einen annähernd geschlossenen, Trommelmantel (40) ergeben.

11. Selbstfahrender Mähdrescher mit einem Dreschwerk nach wenigstens einem der vorangegangenen Ansprüche,
**dadurch gekennzeichnet,**
**dass** die Abdeckbleche (54) verstellbar ist.

12. Selbstfahrender Mähdrescher mit einem Dreschwerk nach wenigstens einem der vorangegangenen Ansprüche,
**dadurch gekennzeichnet,**
**dass** die Paddel (50) und/oder die Stifte (42) in Achsrichtung der Dreschtrommelachse (43, 51) auf den Abdeckblechen (54) angeordnet sind.

13. Selbstfahrender Mähdrescher mit einem Dreschwerk nach wenigstens einem der vorangegangenen Ansprüche,
**dadurch gekennzeichnet,**
**dass** zumindest ein Paddel (50) verstellbar ist.

14. Selbstfahrender Mähdrescher mit einem Dreschwerk nach wenigstens einem der vorangegangenen Ansprüche,
**dadurch gekennzeichnet,**
**dass** die Dreschtrommel (33) von Tragstemen (44) durchsetzt ist, auf denen die Stifte (42) angeordnet sind.

15. Selbstfahrender Mähdrescher mit einem Dreschwerk nach wenigstens einem der vorangegangenen Ansprüche,
**dadurch gekennzeichnet,**
**dass** die Stifte (42) verstellbar sind.

16. Selbstfahrender Mähdrescher mit einem Dreschwerk nach wenigstens einem der vorangegangenen Ansprüche,
**dadurch gekennzeichnet,**
**dass** die Paddel (50) zweier benachbarter, in Achsrichtung der Dreschtrommel (34) verlaufenden Reihen (56) in Achsrichtung versetzt auf dem Trommelmantel (40) angeordnet sind.

## Claims

1. A self-propelled combine harvester (1) having at least one threshing mechanism (5, 6) substantially comprising at least one threshing drum (33, 34) and a threshing and separating concave (35, 36), wherein threshing bars (37, 38) are arranged on the drum peripheral surface of the threshing drum (33, 34) and/or the threshing bars (37, 38) at least partially form the drum peripheral surface, wherein at least one entrainment member (41) is arranged on the threshing drum (33, 34) in the peripheral direction and/or in the axial direction of the threshing drum (33, 34), **characterised in that** the entrainment members (41) project beyond the envelope circle (62, 69) of the threshing drum (33).

2. A self-propelled combine harvester having a threshing mechanism according to claim 1 **characterised in that** the entrainment member (41) is arranged approximately centrally between two threshing bars (37, 38) which are adjacent in the peripheral direction and/or in the axial direction.

3. A self-propelled combine harvester having a threshing mechanism according to at least one of the preceding claims **characterised in that** the entrainment members (41) are in the form of a paddle (50) and/or a pin (42).

4. A self-propelled combine harvester having a threshing mechanism according to at least one of the preceding claims **characterised in that** a plurality of paddles (50) and/or pins (42) are arranged on the threshing drum (33, 34) in the peripheral direction of the threshing drum (33, 34).

5. A self-propelled combine harvester having a threshing mechanism according to at least one of the preceding claims **characterised in that** a plurality of paddles (50) and/or pins (42) are arranged on the threshing drum (33, 34) in the axial direction of the threshing drum (33, 34).

6. A self-propelled combine harvester having a threshing mechanism according to at least one of the preceding claims **characterised in that** the entrainment member (41) has a beater surface (64, 72) which is inclined at an angle (65, 73) relative to an envelope circle (63, 69) of the threshing drum (33, 34).

7. A self-propelled combine harvester having a threshing mechanism according to at least one of the preceding claims **characterised in that** the envelope circle (63, 69) of the paddles (50) and/or the pins (42) does not project beyond the envelope circle (62, 69) of the threshing bars (37, 38).

8. A self-propelled combine harvester having a threshing mechanism according to at least one of the preceding claims **characterised in that** the entrainment members (41) which are in the form of pins (42) or paddles (50) project beyond the envelope circle (62, 69) of the threshing drum (33).

9. A self-propelled combine harvester having a threshing mechanism according to at least one of the preceding claims **characterised in that** the threshing and separating concave (35) is formed by threshing concave segments (46), wherein the pin (42) engages through an intermediate space (48) between the threshing concave segments (46).

10. A self-propelled combine harvester having a threshing mechanism according to at least one of the preceding claims **characterised in that** cover plates (54) are associated with the threshing drum (34) in such a way that the threshing bars (38) together with the cover plates (54) which extend parallel to them afford an approximately closed drum periphery (40).

11. A self-propelled combine harvester having a threshing mechanism according to at least one of the preceding claims **characterised in that** the cover plates (54) are adjustable.

12. A self-propelled combine harvester having a threshing mechanism according to at least one of the preceding claims **characterised in that** the paddles (50) and/or the pins (42) are arranged on the cover plates (54) in the axial direction of the threshing drum axis (43, 51).

13. A self-propelled combine harvester having a threshing mechanism according to at least one of the preceding claims **characterised in that** at least one paddle (50) is adjustable.

14. A self-propelled combine harvester having a threshing mechanism according to at least one of the preceding claims **characterised in that** carrier stars (44) on which the pins (42) are arranged pass through the threshing drum (33).

15. A self-propelled combine harvester having a threshing mechanism according to at least one of the preceding claims **characterised in that** the pins (42) are adjustable.

16. A self-propelled combine harvester having a threshing mechanism according to at least one of the preceding claims **characterised in that** the paddles (50) of two adjacent rows (56) extending in the axial direction of the threshing drum (34) are arranged on the drum periphery (40) in displaced relationship in the axial direction.

## Revendications

1. Moissonneuse-batteuse automotrice (1) avec au moins des organes de battage (5, 6) constitués essentiellement d'au moins un batteur (33, 34) et d'un contre-batteur (35, 36), dans laquelle, sur la surface enveloppante du tambour du batteur (33, 34), des battes (37, 38) sont disposées et/ou les battes (37, 38) forment au moins partiellement la surface enveloppante du tambour, dans laquelle, dans le sens périphérique et/ou dans le sens de l'axe du batteur (33, 34), au moins un entraîneur (41) est disposé sur le batteur (33, 34), **caractérisée en ce que** les entraîneurs (41) ressortent des lignes de flanc (62, 69) du batteur (33).

2. Moissonneuse-batteuse automotrice avec des organes de battage suivant la revendication 1, **caractérisée en ce que** l'entraîneur (41) est disposé à peu près au centre entre deux battes (37, 38) dans le sens périphérique et/ou dans le sens de l'axe.

3. Moissonneuse-batteuse automotrice avec des organes de battage suivant au moins l'une des revendications qui précèdent, **caractérisée en ce que** les entraîneurs (41) sont exécutés sous la forme de palettes (50) et/ou de pointes (42).

4. Moissonneuse-batteuse automotrice avec des organes de battage suivant au moins l'une des revendications qui précèdent, **caractérisée en ce qu'**une pluralité de palettes (50) et/ou de pointes (42) est disposée dans le sens périphérique des batteurs (33, 34) sur le batteur (33, 34).

5. Moissonneuse-batteuse automotrice avec des organes de battage suivant au moins l'une des revendications qui précèdent, **caractérisée en ce qu'**une pluralité de palettes (50) et/ou de pointes (42) est disposée dans le sens du batteur (33, 34) sur le batteur (33, 34).

6. Moissonneuse-batteuse automotrice avec des organes de battage suivant au moins l'une des revendications qui précèdent, **caractérisée en ce que** l'entraîneur (41) présente une surface de battage (64, 72) qui est inclinée sous un certain angle (65, 73) vers des lignes de flanc (63, 69) du batteur (33, 34).

7. Moissonneuse-batteuse automotrice avec des organes de battage suivant au moins l'une des revendications qui précèdent, **caractérisée en ce que** les lignes de flanc (63, 69) des palettes (60) et/ou des pointes (42) ne ressortent pas des lignes de flanc (62, 69) des battes (37, 38).

8. Moissonneuse-batteuse automotrice avec des organes de battage suivant au moins l'une des revendications qui précèdent, **caractérisée en ce que** les entraîneurs (41) exécutés sous la forme de pointes (42) ou de palettes (50) ressortent des lignes de flanc (62, 69) du batteur (33).

9. Moissonneuse-batteuse automotrice avec des organes de battage suivant au moins l'une des revendications qui précèdent, **caractérisée en ce que** le contre-batteur (35) est formé par des segments de contre-batteur (46), la pointe (42) s'insérant par un intervalle (48) entre les segments de contre-batteur (46).

10. Moissonneuse-batteuse automotrice avec des organes de battage suivant au moins l'une des revendications qui précèdent, **caractérisée en ce que** le batteur (34) comporte des débourreurs (54) de manière telle que les battes (38) donnent, avec les débourreurs (54) parallèles, une surface enveloppante du tambour (40) à peu près fermée.

11. Moissonneuse-batteuse automotrice avec des organes de battage suivant au moins l'une des revendications qui précèdent, **caractérisée en ce que** le débourreur (54) est réglable.

12. Moissonneuse-batteuse automotrice avec des organes de battage suivant au moins l'une des revendications qui précèdent, **caractérisée en ce que** les palettes (50) et/ou les pointes (42) sont disposées sur les débourreurs (54) dans le sens de l'axe du batteur (43, 51).

13. Moissonneuse-batteuse automotrice avec des organes de battage suivant au moins l'une des revendications qui précèdent, **caractérisée en ce que** au moins une palette (50) est réglable.

14. Moissonneuse-batteuse automotrice avec des organes de battage suivant au moins l'une des revendications qui précèdent, **caractérisée en ce que** le batteur (33) est traversé par des étoiles de support (44) sur lesquelles les pointes (42) sont disposées.

15. Moissonneuse-batteuse automotrice avec des organes de battage suivant au moins l'une des revendications qui précèdent, **caractérisée en ce que** les pointes (42) sont réglables.

16. Moissonneuse-batteuse automotrice avec des organes de battage suivant au moins l'une des revendications qui précèdent, **caractérisée en ce que** les palettes (50) de deux séries voisines orientées dans le sens de l'axe des batteurs (34) sont disposées à décalage par rapport au sens de l'axe sur la surface enveloppante du tambour (40).
